Europäisches Patentamt

European Patent Office

Office européen des brevets

(19)

(11) EP 1 617 681 A1

(12) EUROPEAN PATENT APPLICATION
published in accordance with Art. 158(3) EPC

(43) Date of publication:
18.01.2006 Bulletin 2006/03

(51) Int Cl.:
H04N 9/64 (1985.01)

(21) Application number: 04720222.1

(22) Date of filing: 12.03.2004

(86) International application number:
PCT/JP2004/003353

(87) International publication number:
WO 2004/086770 (07.10.2004 Gazette 2004/41)

(84) Designated Contracting States:
AT BE BG CH CY CZ DE DK EE ES FI FR GB GR
HU IE IT LI LU MC NL PL PT RO SE SI SK TR
Designated Extension States:
AL LT LV MK

(30) Priority: 27.03.2003 JP 2003088060

(71) Applicant: SONY CORPORATION
Tokyo 141-0001 (JP)

(72) Inventor: NAKABAYASHI, Kiyotaka
c/o Sony Corporation
Shinagawa-ku
Tokyo 141-0001 (JP)

(74) Representative: Mills, Julia
D Young & Co
120 Holborn
London EC1N 2DY (GB)

(54) IMAGING DEVICE

(57) To change the amounts of correction used to correct a specific color in video signals depending on a shooting situation or an image to be captured, an imaging apparatus includes: selection means for selecting desired shooting mode information from pieces of set shooting mode information, each of the pieces of shooting mode information including information concerning a specific color determined depending on a predetermined shooting condition; extraction means for extracting video signals of a specific color from video signals on the basis of the selected shooting mode information; color difference detection means for detecting color difference data of the specific color from the extracted specific-color video signals; and correction reference data storage means for storing pieces of correction reference data, serving as references for correcting the specific color to a predetermined color. Correction reference data corresponding to the specific color is selected from the correction reference data storage means on the basis of the selected shooting mode information. Color correction values to correct the specific color to the predetermined color are calculated on the basis of the selected correction reference data and the color difference data of the specific color detected by the color difference detection means. The specific color in the video signals is corrected to the predetermined color on the basis of the calculated color correction values.

Fig.1

EP 1 617 681 A1

**Description**

Technical Field

The present invention relates to imaging apparatuses, and more particularly, to an imaging apparatus capable of correcting a specific color in video signals to a predetermined color, such as a memory color.

Background Art

In related arts, apparatuses, such as digital still cameras, select a shooting mode depending on an image to be captured (e.g., sea, a nightscape, a portrait, or a landscape) to automatically perform various settings, e.g., focusing and white balance setting, thus correcting a specific color in video signals to a predetermined color suitable for the captured image.

The above-mentioned apparatuses capable of correcting a specific color in video signals include an image processing apparatus for correcting a specific color to a color that human beings subconsciously remember and feel as the most beautiful color, i.e., a memory color (refer to, e.g., Japanese Unexamined Patent Application Publication No. 2001-292390 (pp. 3-5, Fig. 5)).

For example, when a person shoots a landscape including blue sky and views a captured image, in many cases, the person imagines a more vibrant blue than the sky blue actually seen. Accordingly, the above-mentioned apparatus corrects a blue (specific color) in the actually captured image to a memory blue color and reproduces the image with an imagined color (i.e., the memory color).

An overview of a color correcting process of correcting a specific color in captured video signals to a memory color will now be described.

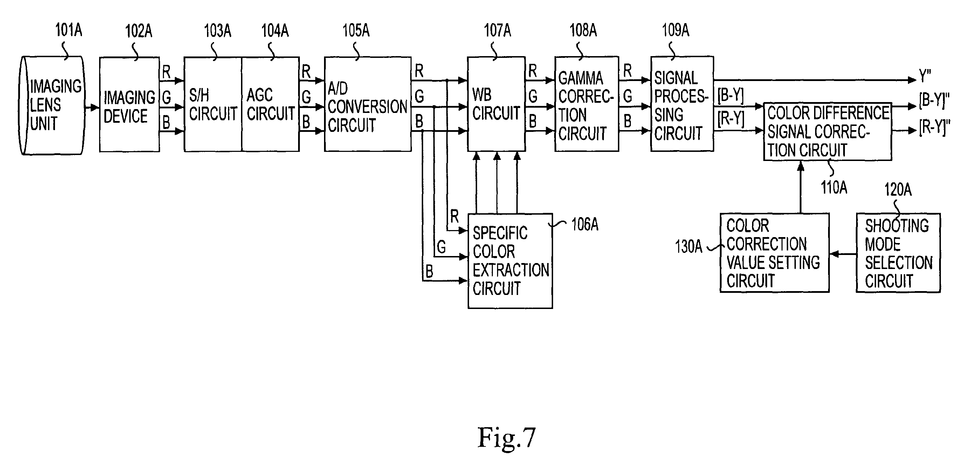

Fig. 7 is a block diagram of the schematic structure of an essential part for performing a color correcting process in a conventional imaging apparatus. An imaging apparatus 100A includes an imaging lens unit 101A, an imaging device 102A, an S/H (Sample/Hold) circuit 103A, an AGC (Automatic Gain Control) circuit 104A, an A/D (Analog/Digital) conversion circuit 105A, a specific color extraction circuit 106A, a WB (White Balance) circuit 107A, a gamma correction circuit 108A, a signal processing circuit 109A, a color difference signal correction circuit 110A, a shooting mode selection circuit 120A, and a color correction value setting circuit 130A.

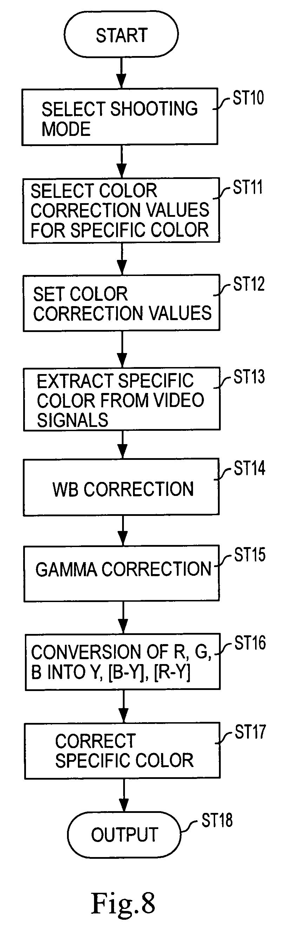

The general outlines of a color signal correcting process in the imaging apparatus 100A with the above-mentioned structure will now be described with reference to a flowchart of Fig. 8.

First, when a user selects a desired shooting mode (for e.g., sea, a nightscape, a portrait, or a landscape) through the shooting mode selection circuit 120A, the respective components of the apparatus automatically perform various settings, such as focusing and white balance setting, depending on the shooting mode selected through the shooting mode selection circuit 120A (ST10).

The color correction value setting circuit 130A includes table data corresponding to color correction values to correct a specific color to a memory color. Color correction values for the specific color are selected from the table data depending on the selected shooting mode and the selected color correction values are set in the color difference signal correction circuit 110A (ST11, ST12).

After shooting starts, the imaging lens unit 101A captures light reflected or generated from a subject. The imaging device 102A converts the light into electrical signals, which are subjected to processing through the S/H circuit 103A and the AGC circuit 104A. The A/D conversion circuit 105A converts the signals into digital video signals (R [red]/G [green]/B [blue]) and supplies the signals to the specific color extraction circuit 106A and the WB (White Balance) circuit 107A.

The specific color extraction circuit 106A extracts video signals of a specific color from the video signals transmitted from the A/D conversion circuit 105A, calculates the amounts of white balance control suitable for the extracted specific-color video signals, and supplies the white balance control amounts to the WB (White Balance) circuit 107A (ST13) .

The WB (White Balance) circuit 107A determines the color temperature of the video signals (R [red] /G [green] /B [blue]) supplied from the A/D conversion circuit 105A, corrects the white balance of the video signals (R [red]/G [green]/B [blue]) on the basis of the white balance control amounts supplied from the specific color extraction circuit 106A, and supplies the resultant signals to the gamma correction circuit 108A. The gamma correction circuit 108A corrects the gray scale of the video signals and transmits the resultant signals to the signal processing circuit 109A (ST14, ST15).

The signal processing circuit 109A converts the digital video signals (R [red]/G [green]/B [blue]) supplied from the gamma correction circuit 108A into a luminance signal Y, a color difference signal [B-Y], and a color difference signal [R-Y], outputs the luminance signal Y, and supplies the obtained color difference signals [B-Y] and [R-Y] to the color difference signal correction circuit 110A (ST16).

The color difference signal correction circuit 110A corrects the specific color in the color difference signals [B-Y] and [R-Y] supplied from the signal processing circuit 109A to a predetermined memory color on the basis of the color correction values set by the color correction value setting circuit 130A. Then, the color difference signal correction circuit 110A outputs color-corrected color difference signals [B-Y]" and [R-Y]" to the next-stage circuit (ST17, ST18).

For example, a case where a certain specific color $\alpha$ is corrected to a memory color $\alpha 1$ will now be described as an example.

When a certain shooting mode is selected in the shooting mode selection circuit 120A, the color correction value setting circuit 130A selects color correction values to correct the specific color $\alpha$ to the memory color $\alpha l$ from the table data depending on the shooting mode and sets the selected values in the color difference signal correction circuit 110A.

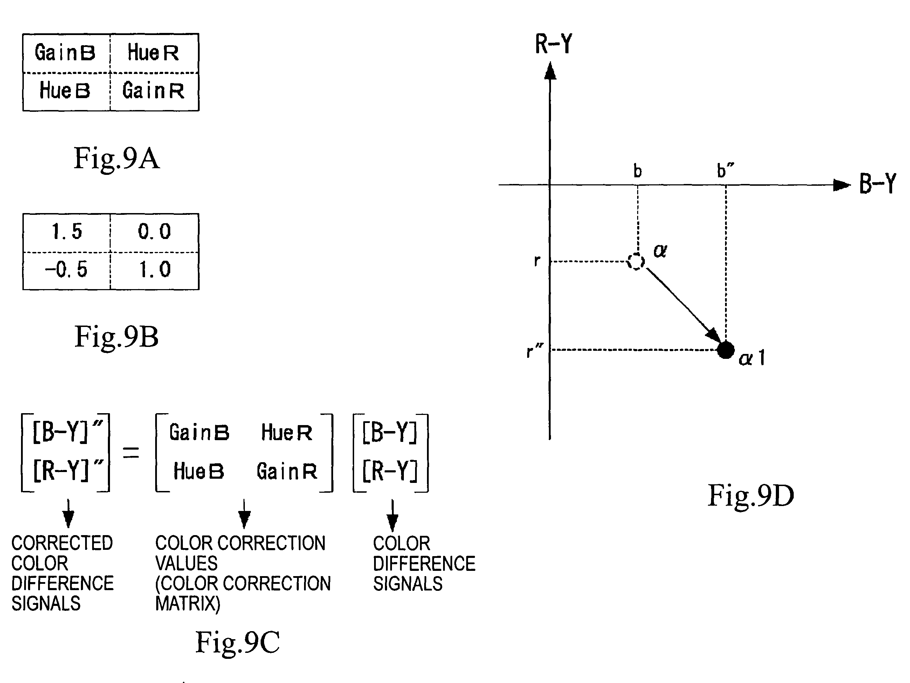

Specifically, as shown in Fig. 9A, the color correction values are given as a color correction matrix composed of parameters (coefficients), i.e., the amounts of correction GainB and GainR in the gain direction of the specific color and the amounts of correction HueB and HueR in the hue direction thereof.

For example, when parameters "1.5", "1.0", "-0.5", and "0.0" are given as GainB, GainR, HueB, and HueR, serving as the correction amounts in the gain direction of the specific color and those in the hue direction thereof, the color correction values (color correction matrix) as shown in Fig. 9B are obtained.

The above-mentioned color correction values are set in the color difference signal correction circuit 110A. As shown in Fig. 9C, the color difference signals [B-Y] and [R-Y] supplied from the signal processing circuit 109A are subjected to linear transformation using the color correction values (color correction matrix), thus achieving the color correcting process.

For example, in a color difference plane as shown in Fig. 9D, the specific color $\alpha$ (b, r) included in the color difference signals [B-Y] and [R-Y] is transformed to the predetermined memory color $\alpha l$ (b", r"), so that the color difference signals [B-Y]" and [R-Y]" are output.

As mentioned above, a specific color in video signals is corrected to a predetermined memory color depending on a shooting mode to reproduce an image with an imagined color (i.e., the memory color).

In the conventional imaging apparatus, however, when any shooting mode is selected, color correction values (amounts of color correction) to correct a specific color are fixedly selected and set. Disadvantageously, the specific color is not necessarily corrected to a favorable color depending on a shooting situation or an image to be captured.

Therefore, it is an object of the present invention to provide an imaging apparatus capable of changing the amounts of correction to correct a specific color in video signals depending on a shooting situation or an image to be captured.

Disclosure of Invention

To achieve the above-mentioned object, the present invention provides the following:

(1) An imaging apparatus including: shooting mode selection means, in which pieces of shooting mode information each including information concerning a specific color determined depending on a predetermined shooting condition are set, for selecting desired shooting mode information from the pieces of shooting mode information; specific color extraction means for extracting video signals of a specific color from video signals on the basis of the shooting mode information selected by the shooting mode selection means; color difference detection means for detecting color difference data of the specific color from the specific-color video signals extracted by the specific color extraction means; correction reference data storage means for storing pieces of correction reference data, serving as references for correcting the specific color to a predetermined color; color correction value calculation means for selecting correction reference data corresponding to the specific color from the correction reference data storage means on the basis of the shooting mode information selected by the shooting mode selection means to calculate color correction values on the basis of the selected correction reference data and the color difference data of the specific color detected by the color difference detection means, the color correction values being used to correct the specific color to the predetermined color; and color correction means for correcting the specific color in the video signals to the predetermined color on the basis of the color correction values calculated by the color correction value calculation means.

(2) The imaging apparatus according to (1), wherein the specific color extraction means has a function of changing an extraction range of the specific-color video signals depending on the luminance level of the video signals.

(3) The imaging apparatus according to (1), wherein the correction reference data storage means has a function capable of changing the stored correction reference data.

(4) The imaging apparatus according to (1), wherein the shooting mode selection means has a function of automatically selecting the shooting mode information depending on a shooting environment.

(5) An imaging apparatus including: shooting mode selection means, in which pieces of shooting mode information each including information concerning a specific color determined depending on a predetermined shooting condition are set, for selecting desired shooting mode information from the pieces of shooting mode information; specific color extraction means for extracting video signals of a specific color from video signals on the basis of the shooting mode information selected by the shooting mode selection means; color difference detection means for detecting color difference data of the specific color from the specific-color video signals extracted by the specific color extraction means; correction reference data storage means for storing pieces of correction reference data, serving as references for correcting the specific color to a predetermined color; color correction value calculation means for selecting correction reference data corresponding to the specific color from the correction reference data storage means on the basis of the shooting mode information selected by the shooting mode selection means to calculate color correction values on the basis of the selected correction reference data and the color difference data of the specific color detected by the color difference detection means, the color correction values being used to correct the specific color to the predetermined color; color correction means for correcting the specific color of the video signals to the predetermined color on the basis of the color correction values calculated by the color correction value calculation means; and luminance correction means for correcting the luminance level of the video signals depending on the luminance level of the specific-color video signals extracted by the specific color extraction means.

(6) The imaging apparatus according to (5), wherein the luminance correction means has a function of calculating the ratio of the specific-color video signals to the video signals to correct the luminance level of the specific-color video signals in accordance with the calculated ratio.

(7) The imaging apparatus according to (5), wherein the specific color extraction means has a function of changing an extraction range of the specific-color video signals depending on the luminance level of the video signals.

(8) The imaging apparatus according to (5), wherein the correction reference data storage means has a function capable of changing the stored correction reference data.

(9) The imaging apparatus according to (5), wherein the shooting mode selection means has a function of automatically selecting the shooting mode information depending on a shooting environment.

(10) An imaging method including:

a shooting mode selection step of selecting desired shooting mode information from pieces of set shooting mode information, each of the pieces of shooting mode information including information concerning a specific color determined depending on a predetermined shooting condition;

a specific color extraction step of extracting video signals of a specific color from video signals on the basis of the shooting mode information selected in the shooting mode selection step;

a color difference detection step of detecting color difference data of the specific color from the specific-color video signals extracted in the specific color extraction step;

a color correction value calculation step of selecting correction reference data corresponding to the specific color from correction reference data storage means for storing pieces of correction reference data, serving as references for correcting the specific color to a predetermined color, on the basis of the shooting mode information selected in the shooting mode selection step to calculate color correction values on the basis of the selected correction reference data and the color difference data of the specific color detected in the color difference detection step, the color correction values being used to correct the specific color to the predetermined color; and

a color correction step of correcting the specific color of the video signals to the predetermined color on the basis of the color correction values calculated in the color correction value calculation step.

According to the imaging apparatus with the above-mentioned structure, video signals of a specific color are extracted from video signals on the basis of selected shooting mode information, color difference data is detected from the extracted specific-color video signals, color correction values to correct the specific color to a predetermined color are calculated on the basis of the detected color difference data and correction reference data for the specific color, and the specific color in the video signals is corrected to the predetermined color on the basis of the calculated color correction values. Advantageously, the specific color can be corrected according to the amounts of correction depending on a shooting situation or an image to be captured.

In addition, the luminance level of the video signals is corrected depending on the luminance level of the specific-color video signals. Alternatively, the ratio of the specific-color video signals to the video signals is calculated and the luminance level of the specific color is corrected in accordance with the calculated ratio. Advantageously, the luminance level of the specific color can be corrected depending on a shooting situation or an image to be captured.

Brief Description of the Drawings

Fig. 1 is a block diagram of the schematic structure of an essential part for performing a color correcting process in an imaging apparatus according to the present invention.

Fig. 2 is a flowchart showing the color correcting process by the imaging apparatus of Fig. 1.

Fig. 3 is a diagram schematically showing a state in which an extraction range of a specific color is changed depending on the luminance level of video signals in the imaging apparatus of Fig. 1.

Fig. 4 includes diagrams explaining a lookup table included in the imaging apparatus of Fig. 1.

Fig. 5 includes diagrams explaining color point correction in the imaging apparatus of Fig. 1.

Fig. 6 includes diagrams explaining hue correction in the imaging apparatus of Fig. 1.

Fig. 7 is a block diagram of the schematic structure of an essential part for performing a color correcting process in a conventional imaging apparatus.

Fig. 8 is a flowchart of the color correcting process by the imaging apparatus of Fig. 7.

Figs. 9A to 9D are diagrams schematically showing the details of the color correcting process by the imaging apparatus of Fig. 7.

Best Mode for Carrying Out the Invention

An imaging apparatus according to an embodiment of the present invention will now be described with reference to the drawings. The drawings are used only for the description and do not limit the technical scope of the present invention.

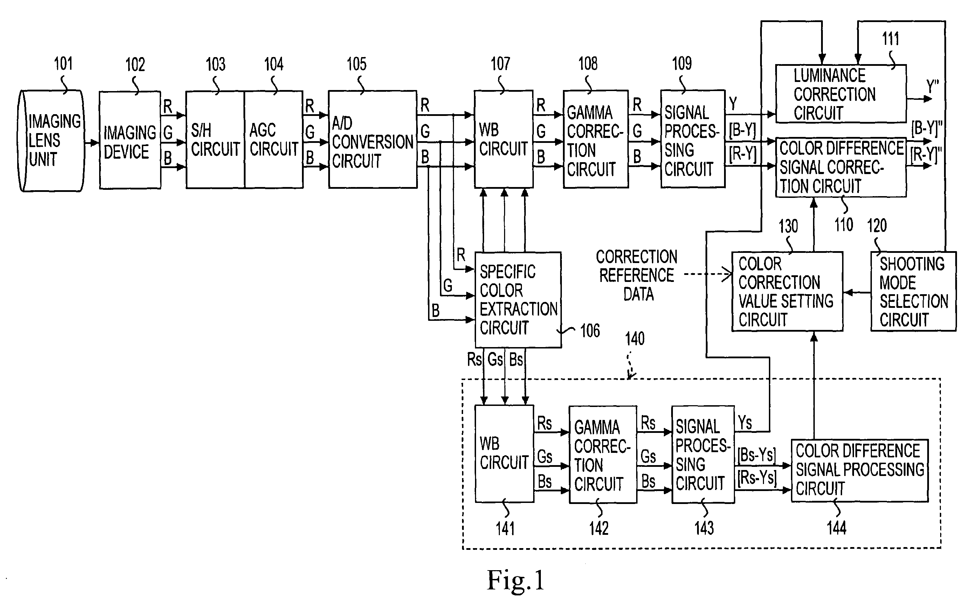

Fig. 1 is a block diagram of the schematic structure of an essential part of the imaging apparatus, the part for performing a color signal correcting process and including an imaging lens unit 101, an imaging device 102, an S/H (Sample/Hold) circuit 103, an AGC (Automatic Gain Control) circuit 104, an A/D (Analog/Digital) conversion circuit 105, a specific color extraction circuit 106, a WB (White Balance) circuit 107, a gamma correction circuit 108, a signal processing circuit 109, a color difference signal correction circuit 110, a luminance correction circuit 111, a shooting mode selection circuit 120, a color correction value setting circuit 130, and a specific-color signal processing unit 140.

The imaging lens unit 101 captures light reflected or generated from a subject and allows the captured light to pass therethrough to the imaging device 102.

The imaging device 102 includes an array of pixels (e.g., a CCD (Charge Coupled Device)) for converting light into electrical signals. The imaging device 102 converts the light from the subject passing through the imaging lens unit 101 into electrical signals that are analog video signals using the respective pixels and supplies the analog video signals to the S/H circuit 103.

The S/H circuit 103 samples the analog video signals supplied from the imaging device 102 and transmits the signals to the AGC circuit 104. The S/H circuit 103 holds sampled values until a process by the A/D conversion circuit 105 is finished. After the process is finished, the S/H circuit 103 transmits the next sampled values to the AGC circuit 104.

The AGC circuit 104 amplifies the analog video signals sampled by the S/H circuit 103 and transmits the resultant signals to the A/D conversion circuit 105.

The A/D conversion circuit 105 converts the analog video signals amplified by the AGC circuit 104 into digital video signals (R [red]/G [green]/B [blue]) and transmits the signals to the specific color extraction circuit 106 and the WB circuit 107.

On the basis of shooting mode information supplied from the shooting mode selection circuit 120, which will be described below, the specific color extraction circuit 106 extracts video signals of a specific color (hereinafter, referred to as specific-color signals (Rs [red]/Gs [green]/Bs [blue]) to be corrected from the video signals (R [red]/G [green]/B [blue]) transmitted from the A/D conversion circuit 105. The specific color extraction circuit 106 calculates the amounts of white balance control and transmits the amounts to the WB circuit 107. In addition, the specific color extraction circuit 106 transmits the extracted specific-color signals (Rs [red]/Gs [green]/Bs [blue]) to a WB circuit 141 included in the specific-color signal processing unit 140.

When extracting specific-color video signals, the specific color extraction circuit 106 changes a specific color extraction range depending on the luminance level of the video signals (R [red]/G [green]/B [blue]) to detect the specific-color video signals.

The WB circuit 107 corrects the white balance of the video signals (R [red]/G [green]/B [blue]) transmitted from the A/D conversion circuit 105 in accordance with the control amounts calculated by the specific color extraction circuit 106 and then transmits the resultant signals to the gamma correction circuit 108.

The gamma correction circuit 108 corrects the gray scale of the video signals (R [red]/G [green]/B [blue]) transmitted from the WB circuit 107, i.e., performs gamma correction to the signals and transmits the resultant signals to the signal processing circuit 109.

The signal processing circuit 109 converts the video signals supplied from the gamma correction circuit 108 into a luminance signal Y, a color difference signal [B-Y], and a color difference signal [R-Y]. The signal processing circuit 109 transmits the obtained color difference signals [B-Y] and [R-Y] to the color difference signal correction circuit 110 and also transmits the obtained luminance signal Y to the luminance correction circuit 111.

The color difference signal correction circuit 110 performs a color correcting process to the color difference signals [B-Y] and [R-Y] supplied from the signal processing circuit 109 on the basis of the color correction values calculated by the color correction value setting circuit 130, which will be described below, thus obtaining corrected color difference signals [B-Y]" and [R-Y]". The color difference signal correction circuit 110 transmits the corrected color difference signals [B-Y]" and [R-Y]" to the next-stage circuit.

The luminance correction circuit 111 corrects the luminance level of the luminance signal Y transmitted from the signal processing circuit 109 on the basis of the shooting mode information supplied from the shooting mode selection circuit 120 and a specific-color luminance signal Ys obtained by a signal processing circuit 143 included in the specific-color signal processing unit 140 and then transmits a corrected luminance signal Y" to the next-stage circuit.

In addition, the luminance correction circuit 111 calculates the ratio of the specific-color video signals to the whole captured video signals (R [red]/G [green]/B [blue]) (whole frame) and corrects the luminance level of the specific color on the basis of the calculated ratio.

The shooting mode selection circuit 120 has a plurality of shooting modes corresponding to shooting conditions and scenes to be shot (e.g., sea, a nightscape, a portrait, and a landscape). A desired shooting mode can be selected.

After the shooting mode is selected, the shooting mode selection circuit 120 transmits shooting mode information corresponding to the selected shooting mode to the respective components of the apparatus, i.e., the specific color extraction circuit 106, the color correction value setting circuit 130, and the luminance correction circuit 111.

The shooting mode information includes information items necessary for automatic various settings, e.g., information concerning a specific color to be corrected, the specific color being predetermined depending on a shooting mode, focusing, and white balance setting.

The shooting mode selection circuit 120 can also automatically select a proper shooting mode depending on a shooting environment, e.g., the brightness of ambient light or the state of a light source. Automatic selection and manual selection can be switched therebetween.

The color correction value setting circuit 130 has a lookup table for storing pieces of correction reference data, serving as references used in calculating color correction values to correct a specific color to a predetermined color.

The correction reference data includes data regarding the reference amounts of correction to correct a specific color to, e.g., a color (hereinafter, referred to as a memory color) that human beings subconsciously remember and feel as the most beautiful color.

The color correction value setting circuit 130 determines a specific color to be corrected on the basis of the shooting mode information supplied from the shooting mode selection circuit 120 and reads out correction reference data for correcting the determined specific color from the lookup table. On the basis of the correction reference data and color difference data transmitted from the color difference signal processing circuit 144 included in the specific-color signal processing unit 140, the color correction value setting circuit 130 calculates color correction values necessary to correct the specific color to the predetermined color (e.g., the memory color) and transmits the calculated values to the color difference signal correction circuit 110.

The correction reference data in the lookup table can be changed. For example, if the apparatus is capable of acquiring data from a recording medium, such as a memory card, other correction reference data can be read from the recording medium (e.g., a memory card) and data in the lookup table can be replaced with the read data. If the apparatus is capable of connecting to a communication network, data in the lookup table can be replaced with correction reference data acquired through the communication network. Accordingly, data in the lookup table can be changed so as to reproduce user's favorable colors and hues. Correction reference data can also be customized every user.

The specific-color signal processing unit 140 includes the WB (White Balance) circuit 141, a gamma correction circuit 142, the signal processing circuit 143, and the color difference signal processing circuit 144.

In the specific-color signal processing unit 140, the WB (White Balance) circuit 141 corrects the white balance of the specific-color signals (Rs [red]/Gs [green]/Bs [blue]) extracted by the specific color extraction circuit 106 and transmits the resultant signals to the gamma correction circuit 142.

The gamma correction circuit 142 of the specific-color signal processing unit 140 corrects the gray scale of the specific-color signals (Rs [red]/Gs [green]/Bs [blue]) supplied from the WB circuit 141, i.e., performs gamma correction to the signals and then transmits the resultant signals to the signal processing circuit 143.

The signal processing circuit 143 of the specific-color signal processing unit 140 converts the specific-color signals (Rs [red]/Gs [green]/Bs [blue]), subjected to gamma correction by the gamma correction circuit 142, into a luminance signal Ys, a color difference signal [Bs-Ys], and a color difference signal [Rs-Ys]. The signal processing circuit 143 transmits the obtained color difference signals [Bs-Ys] and [Rs-Ys] to the color difference signal processing circuit 144 and also transmits the luminance signal Ys to the luminance correction circuit 111.

The color difference signal processing circuit 144 of the specific-color signal processing unit 140 detects color difference data from the color difference signals [Bs-Ys] and [Rs-Ys] supplied from the signal processing circuit 143 and transmits the detected color difference data to the color correction value setting circuit 130.

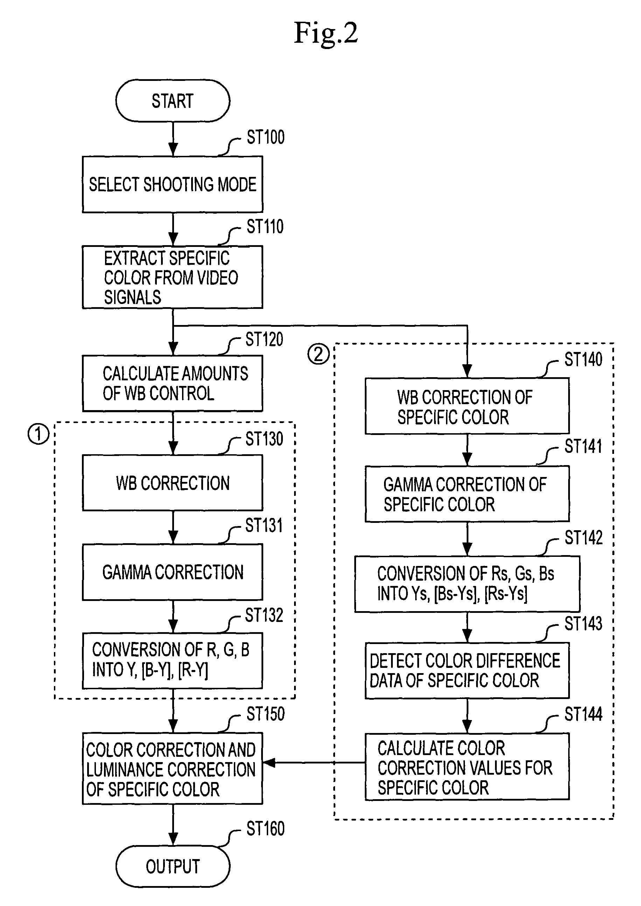

The color correcting process of the imaging apparatus 100 with the above-mentioned structure will now be described with reference to Fig. 2.

First, when a user selects a desired shooting mode through the shooting mode selection circuit 120, or when any shooting mode is automatically selected depending on a shooting environment, shooting mode information corresponding to the selected shooting mode is transmitted to the respective components of the apparatus (i.e., the specific color extraction circuit 106, the color correction value setting circuit 130, and the luminance correction circuit 111), so that various settings, such as focusing and white balance setting, are automatically performed (ST100).

After shooting starts, the imaging lens unit 101 captures light from a subject and allows the light to pass therethrough to the imaging device 102. The imaging device 102 converts the light into electrical signals, which are subjected to processing through the S/H circuit 103 and the AGC circuit 104. The A/D conversion circuit 105 converts the signals into digital video signals (R [red]/G [green]/B [blue]) and transmits the signals to the specific color extraction circuit 106 and the WB (White Balance) circuit 107.

On the shooting mode information supplied from the shooting mode selection circuit 120, the specific color extraction circuit 106 extracts specific-color signals (Rs [red]/Gs [green]/Bs [blue]) from the video signals (R [red]/G [green]/B [blue]) supplied from the A/D conversion circuit 105. The specific color extraction circuit 106 calculates the amounts of white balance control and transmits the control amounts to the WB circuit 107. In addition, the specific color extraction circuit 106 transmits the extracted specific-color signals (Rs [red]/Gs [green]/Bs [blue]) to the WB (White Balance) circuit 141 in the specific-color signal processing unit 140 (ST110, ST120).

Steps of processing the video signals (R [red]/G [green]/B [blue]) will now be described below (part shown by a dotted line ① in Fig. 2).

The WB circuit 107 determines the color temperature of the video signals (R [red]/G [green]/B [blue]) supplied from the A/D conversion circuit 105, corrects the white balance of the video signals (R [red]/G [green]/B [blue]) on the basis of the white balance control amounts calculated by the specific color extraction circuit 106, and transmits the resultant signals to the gamma correction circuit 108 (ST130).

The gamma correction circuit 108 corrects the gray scale of (i.e., performs gamma correction to) the white-balanced video signals (R [red]/G [green]/B [blue]) and transmits the resultant signals to the signal processing circuit 109 (ST131).

The signal processing circuit 109 converts the gamma-corrected video signals (R [red]/G [green]/B [blue]) into a luminance signal Y, a color difference signal [B-Y], and a color difference signal [R-Y]. The signal processing circuit 109 transmits the luminance signal Y to the luminance correction circuit 111 and also transmits the color difference signals [B-Y] and [R-Y] to the color difference signal correction circuit 110 (ST132).

Step of processing the specific-color signals (Rs [red]/Gs [green]/Bs [blue]) will now be described below (part shown by a dotted line ② in Fig. 2). The steps are executed simultaneously with the above-mentioned steps of processing the video signals (R [red]/G [green]/B [blue]).

First, in the specific-color signal processing unit 140, the WB circuit 141 determines the color temperature of the specific-color signals (Rs [red]/Gs [green]/Bs [blue]) extracted by the specific color extraction circuit 106, corrects the white balance of the specific-color signals (Rs [red]/Gs [green]/Bs [blue]), and transmits the resultant signals to the gamma correction circuit 142 (ST140).

The gamma correction circuit 142 of the specific-color signal processing unit 140 corrects the gray scale of (i.e., performs gamma correction to) the white-balanced specific-color signals (Rs [red]/Gs [green]/Bs [blue]) and transmits the resultant signals to the signal processing circuit 143 (ST141).

Subsequently, the signal processing circuit 143 of the specific-color signal processing unit 140 converts the gamma-corrected specific-color signals (Rs [red]/Gs [green]/Bs [blue]) into a luminance signal Ys, a color difference signal [Bs-Ys], and a color difference signal [Rs-Ys]. The signal processing circuit 143 transmits the luminance signal Ys to the luminance correction circuit 111 and also transmits the color difference signals [Bs-Ys] and [Rs-Ys] to the color difference signal processing circuit 144 (ST142).

Subsequently, the color difference signal processing circuit 144 of the specific-color signal processing unit 140 detects color difference data of the specific color from the color difference signals [Bs-Ys] and [Rs-Ys] supplied from the signal processing circuit 143 and transmits the detected color difference data to the color correction value setting circuit 130 (ST143).

The color correction value setting circuit 130 determines a specific color to be corrected on the basis of the shooting mode information and reads out correction reference data for correcting the determined specific color from the lookup table.

On the basis of the correction reference data for the specific color and the color difference data detected by the color difference signal processing circuit 144, the color correction value setting circuit 130 calculates correction values to correct the specific-color video signals to be corrected to a predetermined color (e.g., a memory color) and transmits the calculated color correction values to the color difference signal correction circuit 110 (ST144).

Subsequent to processing of the video signals (R [red]/G [green]/B [blue]) and processing of the specific-color signals (Rs [red]/Gs [green]/Bs [blue]), the specific color is corrected by the color difference signal correction circuit 110 and the luminance correction circuit 111.

On the basis of the color correction values set by the color correction value setting circuit 130, the color difference signal correction circuit 110 performs color correction to the color difference signals [B-Y] and [R-Y] supplied from the signal processing circuit 109 and outputs corrected color difference signals [B-Y]" and [R-Y]" to the next-stage circuit (ST150, ST160).

On the other hand, the luminance correction circuit 111 corrects the luminance level of the luminance signal Y supplied from the signal processing circuit 109 on the basis of the shooting mode information supplied from the shooting mode selection circuit 120 and the luminance signal Ys obtained by the signal processing circuit 143 in the specific-color signal processing unit 140. The luminance correction circuit 111 outputs a corrected luminance signal Y" to the next-stage circuit (ST150, ST160).

The process of correcting a specific color in Fig. 2 will now be described in more details.

On the basis of shooting mode information supplied from the shooting mode selection circuit 120, the specific color extraction circuit 106 extracts video signals of a specific color, i.e., specific-color signals (Rs [red]/Gs [green]/Bs [blue]) from video signals (R [red]/G [green]/B [blue]).

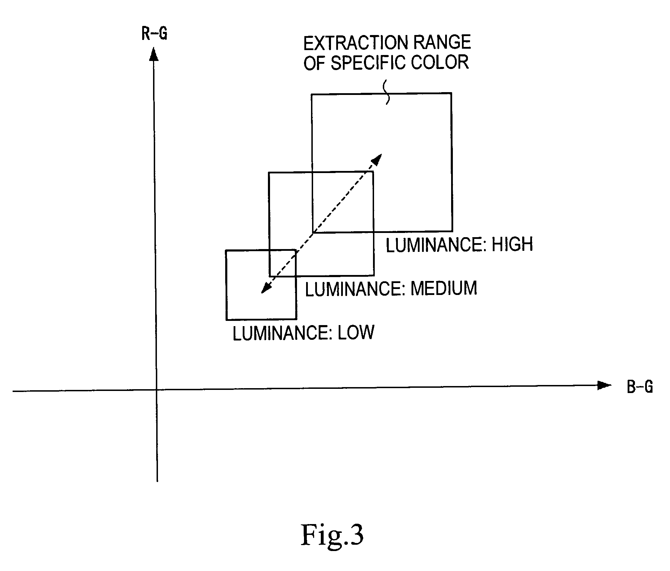

In this instance, as shown in Fig. 3, the specific color extraction circuit 106 changes a specific-color extraction range depending on the luminance level of the video signals (R [red]/G [green]/B [blue]) and then extracts the specific-color video signals.

The specific-color signals (Rs [red]/Gs [green]/Bs [blue]) extracted by the specific color extraction circuit 106 are subjected to white balance correction and gray scale correction by the WB circuit 141 and the gamma correction circuit 142 in the specific-color signal processing unit 140. The resultant signals are converted into a luminance signal Ys, a color difference signal [Bs-Ys], and a color difference signal [Rs-Ys] through the signal processing circuit 143.

The color difference signal processing circuit 144 of the specific-color signal processing unit 140 detects color difference data from the color difference signals [Bs-Ys] and [Rs-Ys] supplied from the signal processing circuit 143 and transmits the detected color difference data to the color correction value setting circuit 130.

Subsequently, on the basis of the shooting mode information supplied from the shooting mode selection circuit 120, the color correction value setting circuit 130 determines a specific color to be corrected and reads out correction reference data for the specific color from the lookup table.

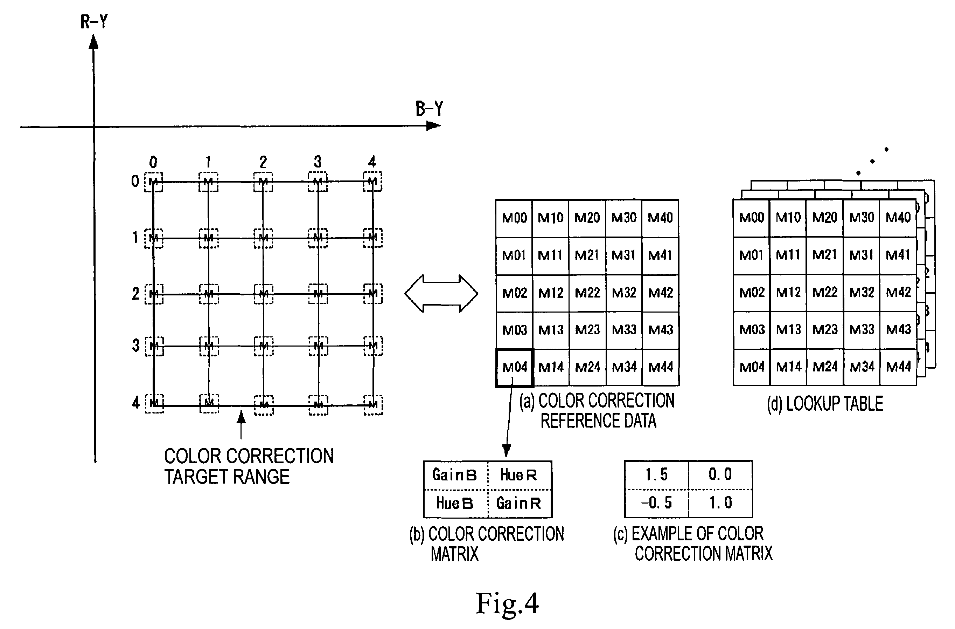

The lookup table will now be described with reference to Fig. 4.

In a color difference plane, a position (or a range) where a predetermined color (e.g., a memory color) exists is determined. A color existing in a predetermined range (hereinafter, referred to as a correction target range) relative to the position (or the range) where the predetermined color (memory color) exists is to be corrected, i.e., a specific color.

The correction target range is equally divided into segments each having a predetermined size. For example, in a color difference plane as shown in Fig. 4(a), the correction target range is divided into a matrix of 5x5 (0 to 4 in each of the row and column directions). Color correction reference data corresponds to color correction matrices "M00" to "M44", which include reference values of the amounts of correction for colors existing in positions ("M" in the diagram) corresponding to respective intersections, i.e., reference values of the amounts of correction to correct the specific color to the memory color.

As shown in Fig. 4(b), four parameters (coefficients) GainB, GainR, HueB, and HueR are assigned to each of the color correction matrices "M00" to "M44", serving as the color correction reference data. The parameters GainB and GainR correspond to the amounts of correction in the gain direction of the color difference signal [B-Y] and the color difference signal [R-Y], respectively. The parameters HueB and HueR correspond to the amounts of correction in the hue direction of the color difference signals [B-Y] and [R-Y], respectively.

For example, when the parameters GainB and GainR as the amounts of correction in the gain direction are set to "1.5" and "1.0", respectively, and the parameters HueB and HueR as the amounts of correction in the hue direction are set to "-0.5" and "0.0", respectively, and those parameters are given to a certain specific color, a color correction matrix is obtained as shown in Fig. 4(c).

As shown in Fig. 4(d), the lookup table is a data structure having pieces of correction reference data for various specific colors previously stored as pieces of table data in a memory.

On the basis of the correction reference data for the specific color read from the lookup table and the color difference data supplied from the color difference signal processing circuit 144, the color correction value setting circuit 130 calculates color correction values to correct the specific color to a predetermined color (memory color).

Specifically, parameters of each color correction matrix in the read correction reference data are recalculated on the basis of the color difference data. The calculated parameters are set in a color correction matrix. The color correction matrix serves as data including color correction values.

In calculating color correction values, a correcting method varies depending on the characteristics of a specific color to be corrected.

First, color point correction will now be described. In the color point correction, for example, when the color of blue sky photographed is corrected to a memory blue-sky color, the color (specific color) to be corrected is converged to the memory color corresponding to a certain point (hereinafter, referred to as a color point) in the color difference plane.

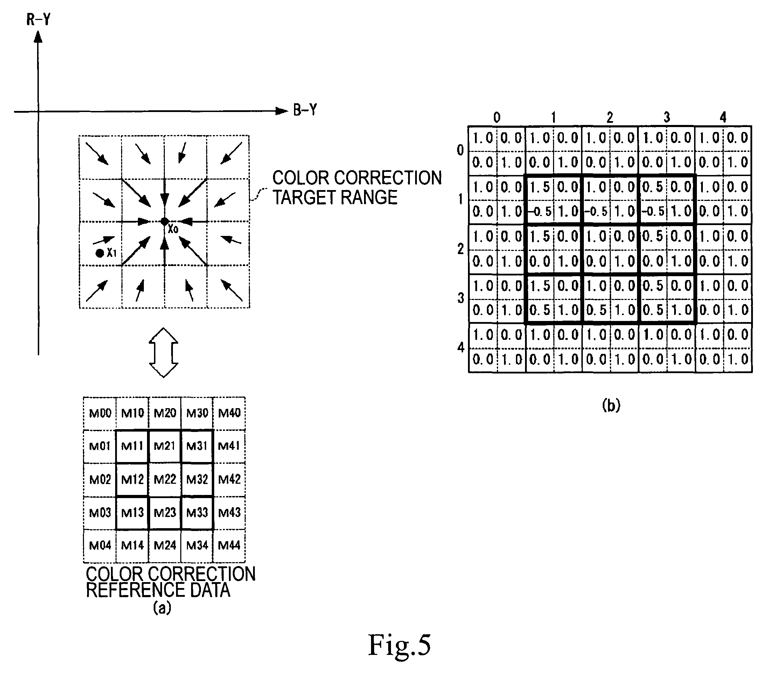

Fig. 5 schematically shows color correction values for color point correction. For example, when correction reference data including color correction matrices "M00" to "M44" is assigned to a correction target range as shown in Fig. 5(a), color correction values are calculated such that the closer a position is to a color point X0 from the outermost position of the correction target range, the more corresponding amounts of correction are increased, and the closer a position is to the color point X0 from a position corresponding to the maximum amounts of correction, the more the corresponding amounts of correction are reduced.

In this case, the center of the correction target range matches the color point X0, i.e., a color corresponding to the center of the range is the same as that in the color point X0. Accordingly, parameters corresponding to the center are set so as not to perform color correction. Regarding a color corresponding to the outermost position of the correction target range, if the color is corrected, a change in color is increased, thus resulting in unnatural correction. Therefore, parameters corresponding to the outermost position are set so as not to perform color correction.

Fig. 5(b) shows an example of a set of color correction values calculated on the basis of the correction reference data including the color correction matrices "M00" to "M44" and the color difference data. A so-called unit matrix (in which parameters of Fig. 4(b) are set such that GainB → "1.0", GainR → "1.0", HueB → "0.0", and HueR → "0.0") is assigned to each of the color correction matrices excluding the matrices "M11" to "M13", "M21", "M23", and "M31" to "M33". Consequently, colors corresponding to the center position and the outermost position of the correction target range are not corrected.

Hue correction will now be described. In the hue correction, e.g., when the skin color of a person who has been shot as a subject is corrected to a memory skin color, a color (specific color) to be corrected is converged to a color in a predetermined hue range in the color difference plane.

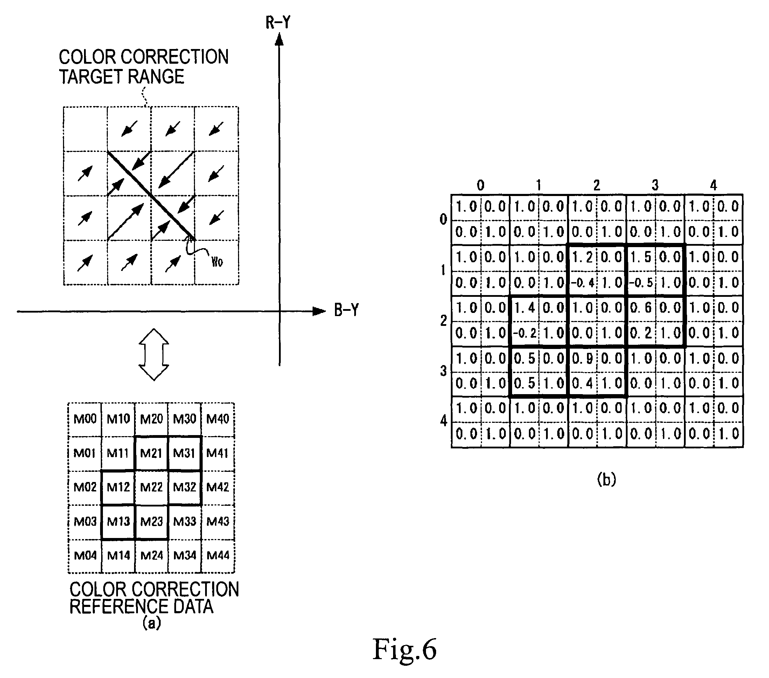

Fig. 6 schematically shows correction values for hue correction. For example, when correction reference data including color correction matrices "M00" to "M44" is assigned to a correction target range shown in Fig. 6(a), color correction values are calculated such that the closer a position is to a predetermined hue range W from the outermost position of the correction target range, the more the corresponding amounts of correction are increased, and the closer a position is to the hue range W from a predetermined position corresponding to the maximum amounts of correction, the more the corresponding amounts of correction are reduced.

In this case, parameters for a color corresponding to the hue range W in the correction target range are set so as not to perform color correction. Regarding a color corresponding to the outermost position of the correction target range, if the color is corrected, a change in color is increased, thus resulting in unnatural correction. Therefore, parameters corresponding to the outermost position are set so as not to perform color correction.

Fig. 6(b) shows an example of a set of color correction values calculated on the basis of the correction reference data including the color correction matrices "M00" to "M44" and the color difference data. A so-called unit matrix (in which parameters of Fig. 4(b) are set such that GainB → "1.0", GainR → "1.0", HueB → "0.0", and HueR → "0.0") is assigned to each of the color correction matrices excluding the matrices "M12", "M13", "M21", "M23", "M31", and "M32". Consequently, colors corresponding to the hue range W and the outermost position of the correction target range are not corrected.

As mentioned above, the color correction value setting circuit 130 calculates color correction values corresponding to the characteristics of the specific color to be corrected and transmits the calculated color correction values to the color difference signal correction circuit 110.

On the basis of the following Expression 1, the color difference signal correction circuit 110 linearly transforms the color difference signals [B-Y] and [R-Y] supplied from the signal processing circuit 109 using the color correction values calculated by the color correction value setting circuit 130, thus performing color correction.

$$\text{Expression 1}$$

$$\begin{bmatrix} [B\text{-}Y]'' \\ [R\text{-}Y]'' \end{bmatrix} = \begin{bmatrix} \text{GainB} & \text{HueR} \\ \text{HueB} & \text{GainR} \end{bmatrix} \begin{bmatrix} [B\text{-}Y] \\ [R\text{-}Y] \end{bmatrix}$$

In other words, the color difference signals [B-Y] and [R-Y] are subjected to color correction on the basis of the color correction values (color correction matrix) calculated in accordance with the color difference data, so that the specific color is corrected to a predetermined color (e.g., a memory color).

To correct a color corresponding to a position (arranged in an area other than the intersections in the color correction target range) in which a color correction matrix is not set in the color difference plane, the amounts of correction are calculated on the basis of (parameters of) color correction matrices surrounding the position and the color is corrected on the basis of the calculated correction amounts.

For example, regarding a color corresponding to a position x1 in Fig. 5(a), the amounts of correction are calculated on the basis of parameters of the color correction matrices "M02", "M03", "M12", and "M13" in the color correction reference data and the color is corrected using the calculated correction amounts.

On the other hand, the luminance correction circuit 111 corrects the luminance level of the luminance signal Y supplied from the signal processing circuit 109 on the basis of the shooting mode information supplied from the shooting mode selection circuit 120 and the luminance signal Ys obtained by the signal processing circuit 143 in the specific-color signal processing unit 140, and then outputs the resultant luminance signal Y" to the next-stage circuit.

The luminance correction circuit 111 can also calculate the ratio of the specific-color video signals to the whole captured video signals (R [red]/G [green]/B [blue]) (whole frame) and change the amount of correction for the luminance level of the specific color in accordance with the calculated ratio.

For example, in the shooting mode for shooting a portrait, to correct the skin color of a subject person, the ratio of the skin color, serving as a specific color, to the whole captured image (frame) is determined. When the ratio is higher than a predetermined ratio, the amount of correction for the luminance level of the skin color is increased. If the ratio is lower than the predetermined ratio, the correction amount for the luminance level of the skin color is reduced.

As mentioned above, even in the same shooting mode, the amount of correction for the luminance level of a specific color is changed depending on a shooting situation, so that the corrected specific color can be further corrected to a favorable color.

As mentioned above, video signals of a specific color to be corrected are extracted from captured video signals, the amounts of color correction are calculated on the basis of the extracted specific-color video signals, and the specific color to be corrected is corrected on the basis of the calculated correction amounts. In addition, the luminance level of the captured video signals is corrected depending on the luminance level of the extracted specific-color video signals. Advantageously, the specific color of the captured video signals can be corrected to a favorable color (e.g., a memory color) based on the correction amounts corresponding to a shooting situation or a captured image.

In addition, the ratio of the specific-color video signals to the whole captured video signals (whole frame) is calculated and the amount of correction for the luminance level of the specific color is changed depending on the calculated ratio. Advantageously, the luminance level can be corrected so that the specific color of the captured video signals is corrected to a favorable color depending on a shooting situation or a captured image.

In addition, the extraction range of the specific color is varied depending on the luminance level of the captured video signals. Advantageously, the accuracy of extracting video signals of the specific color to be corrected can be increased.

**Claims**

1. An imaging apparatus comprising:

   shooting mode selection means for selecting desired shooting mode information from pieces of set shooting mode information, each of the pieces of shooting mode information including information concerning a specific color determined depending on a predetermined shooting condition;
   specific color extraction means for extracting video signals of a specific color from video signals on the basis of the shooting mode information selected by the shooting mode selection means;
   color difference detection means for detecting color difference data of the specific color from the specific-color video signals extracted by the specific color extraction means;
   correction reference data storage means for storing pieces of correction reference data, serving as references for correcting the specific color to a predetermined color;
   color correction value calculation means for selecting correction reference data corresponding to the specific color from the correction reference data storage means on the basis of the shooting mode information selected by the shooting mode selection means to calculate color correction values on the basis of the selected correction reference data and the color difference data of the specific color detected by the color difference detection means, the color correction values being used to correct the specific color to the predetermined color; and
   color correction means for correcting the specific color in the video signals to the predetermined color on the basis of the color correction values calculated by the color correction value calculation means.

2. The imaging apparatus according to Claim 1, wherein the specific color extraction means has a function of changing an extraction range of the specific-color video signals depending on the luminance level of the video signals.

3. The imaging apparatus according to Claim 1, wherein the correction reference data storage means has a function capable of changing the stored correction reference data.

4. The imaging apparatus according to Claim 1, wherein the shooting mode selection means has a function of automatically selecting the shooting mode information depending on a shooting environment.

5. An imaging apparatus comprising:

shooting mode selection means for selecting desired shooting mode information from pieces of set shooting mode information, each of the pieces of shooting mode information including information concerning a specific color determined depending on a predetermined shooting condition;
specific color extraction means for extracting video signals of a specific color from video signals on the basis of the shooting mode information selected by the shooting mode selection means;
color difference detection means for detecting color difference data of the specific color from the specific-color video signals extracted by the specific color extraction means;
correction reference data storage means for storing pieces of correction reference data, serving as references for correcting the specific color to a predetermined color;
color correction value calculation means for selecting correction reference data corresponding to the specific color from the correction reference data storage means on the basis of the shooting mode information selected by the shooting mode selection means to calculate color correction values on the basis of the selected correction reference data and the color difference data of the specific color detected by the color difference detection means, the color correction values being used to correct the specific color to the predetermined color;
color correction means for correcting the specific color of the video signals to the predetermined color on the basis of the color correction values calculated by the color correction value calculation means; and
luminance correction means for correcting the luminance level of the video signals depending on the luminance level of the specific-color video signals extracted by the specific color extraction means.

6. The imaging apparatus according to Claim 5, wherein the luminance correction means has a function of calculating the ratio of the specific-color video signals to the video signals to correct the luminance level of the specific-color video signals in accordance with the calculated ratio.

7. The imaging apparatus according to Claim 5, wherein the specific color extraction means has a function of changing an extraction range of the specific-color video signals depending on the luminance level of the video signals.

8. The imaging apparatus according to Claim 5, wherein the correction reference data storage means has a function capable of changing the stored correction reference data.

9. The imaging apparatus according to Claim 5, wherein the shooting mode selection means has a function of automatically selecting the shooting mode information depending on a shooting environment.

10. An imaging method comprising:

a shooting mode selection step of selecting desired shooting mode information from pieces of set shooting mode information, each of the pieces of shooting mode information including information concerning a specific color determined depending on a predetermined shooting condition;
a specific color extraction step of extracting video signals of a specific color from video signals on the basis of the shooting mode information selected in the shooting mode selection step;
a color difference detection step of detecting color difference data of the specific color from the specific-color video signals extracted in the specific color extraction step;
a color correction value calculation step of selecting correction reference data corresponding to the specific color from correction reference data storage means for storing pieces of correction reference data, serving as references for correcting the specific color to a predetermined color, on the basis of the shooting mode information selected in the shooting mode selection step to calculate color correction values on the basis of the selected correction reference data and the color difference data of the specific color detected in the color difference detection step, the color correction values being used to correct the specific color to the predetermined color; and
a color correction step of correcting the specific color of the video signals to the predetermined color on the basis of the color correction values calculated in the color correction value calculation step.

Fig.1

# Fig.2

START

ST100
SELECT SHOOTING MODE

ST110
EXTRACT SPECIFIC COLOR FROM VIDEO SIGNALS

ST120
CALCULATE AMOUNTS OF WB CONTROL

① 

ST130
WB CORRECTION

ST131
GAMMA CORRECTION

ST132
CONVERSION OF R, G, B INTO Y, [B-Y], [R-Y]

②

ST140
WB CORRECTION OF SPECIFIC COLOR

ST141
GAMMA CORRECTION OF SPECIFIC COLOR

ST142
CONVERSION OF Rs, Gs, Bs INTO Ys, [Bs-Ys], [Rs-Ys]

ST143
DETECT COLOR DIFFERENCE DATA OF SPECIFIC COLOR

ST144
CALCULATE COLOR CORRECTION VALUES FOR SPECIFIC COLOR

ST150
COLOR CORRECTION AND LUMINANCE CORRECTION OF SPECIFIC COLOR

ST160
OUTPUT

Fig.3

R-Y

B-Y

0 1 2 3 4

0

1

2

3

4

COLOR CORRECTION
TARGET RANGE

| M00 | M10 | M20 | M30 | M40 |
|-----|-----|-----|-----|-----|
| M01 | M11 | M21 | M31 | M41 |
| M02 | M12 | M22 | M32 | M42 |
| M03 | M13 | M23 | M33 | M43 |
| M04 | M14 | M24 | M34 | M44 |

(a) COLOR CORRECTION
REFERENCE DATA

| M00 | M10 | M20 | M30 | M40 |
|-----|-----|-----|-----|-----|
| M01 | M11 | M21 | M31 | M41 |
| M02 | M12 | M22 | M32 | M42 |
| M03 | M13 | M23 | M33 | M43 |
| M04 | M14 | M24 | M34 | M44 |

(d) LOOKUP TABLE

| GainB | HueR |
|-------|------|
| HueB | GainR |

(b) COLOR CORRECTION
MATRIX

| 1.5 | 0.0 |
|-----|-----|
| -0.5 | 1.0 |

(c) EXAMPLE OF COLOR
CORRECTION MATRIX

Fig.4

Fig.5

R-Y

COLOR CORRECTION
TARGET RANGE

Wo

B-Y

COLOR CORRECTION
REFERENCE DATA

(a)

| | M00 | M10 | M20 | M30 | M40 |
|---|---|---|---|---|---|
| | M01 | M11 | M21 | M31 | M41 |
| | M02 | M12 | M22 | M32 | M42 |
| | M03 | M13 | M23 | M33 | M43 |
| | M04 | M14 | M24 | M34 | M44 |

(b)

| | 0 | | 1 | | 2 | | 3 | | 4 | |
|---|---|---|---|---|---|---|---|---|---|---|
| 0 | 1.0 | 0.0 | 1.0 | 0.0 | 1.0 | 0.0 | 1.0 | 0.0 | 1.0 | 0.0 |
| | 0.0 | 1.0 | 0.0 | 1.0 | 0.0 | 1.0 | 0.0 | 1.0 | 0.0 | 1.0 |
| 1 | 1.0 | 0.0 | 1.0 | 0.0 | 1.2 | 0.0 | 1.5 | 0.0 | 1.0 | 0.0 |
| | 0.0 | 1.0 | 0.0 | 1.0 | -0.4 | 1.0 | -0.5 | 1.0 | 0.0 | 1.0 |
| 2 | 1.0 | 0.0 | 1.4 | 0.0 | 1.0 | 0.0 | 0.6 | 0.0 | 1.0 | 0.0 |
| | 0.0 | 1.0 | -0.2 | 1.0 | 0.0 | 1.0 | 0.2 | 1.0 | 0.0 | 1.0 |
| 3 | 1.0 | 0.0 | 0.5 | 0.0 | 0.9 | 0.0 | 1.0 | 0.0 | 1.0 | 0.0 |
| | 0.0 | 1.0 | 0.5 | 1.0 | 0.4 | 1.0 | 0.0 | 1.0 | 0.0 | 1.0 |
| 4 | 1.0 | 0.0 | 1.0 | 0.0 | 1.0 | 0.0 | 1.0 | 0.0 | 1.0 | 0.0 |
| | 0.0 | 1.0 | 0.0 | 1.0 | 0.0 | 1.0 | 0.0 | 1.0 | 0.0 | 1.0 |

Fig.6

EP 1 617 681 A1

101A IMAGING LENS UNIT

102A IMAGING DEVICE

103A S/H CIRCUIT

104A AGC CIRCUIT

105A A/D CONVERSION CIRCUIT

107A WB CIRCUIT

108A GAMMA CORREC-TION CIRCUIT

109A SIGNAL PROCES-SING CIRCUIT

106A SPECIFIC COLOR EXTRACTION CIRCUIT

110A COLOR DIFFERENCE SIGNAL CORREC-TION CIRCUIT

130A COLOR CORRECTION VALUE SETTING CIRCUIT

120A SHOOTING MODE SELECTION CIRCUIT

R G B

Y"
[B-Y]"
[R-Y]"

[B-Y]
[R-Y]

Fig.7

```
                    ┌─────────────┐
                    │    START    │
                    └──────┬──────┘
                           ↓
              ┌────────────────────────┐  ST10
              │ SELECT SHOOTING        │
              │ MODE                   │
              └───────────┬────────────┘
                          ↓
              ┌────────────────────────┐  ST11
              │ SELECT COLOR           │
              │ CORRECTION VALUES      │
              │ FOR SPECIFIC COLOR     │
              └───────────┬────────────┘
                          ↓
              ┌────────────────────────┐  ST12
              │ SET COLOR              │
              │ CORRECTION VALUES      │
              └───────────┬────────────┘
                          ↓
              ┌────────────────────────┐  ST13
              │ EXTRACT SPECIFIC       │
              │ COLOR FROM VIDEO       │
              │ SIGNALS                │
              └───────────┬────────────┘
                          ↓
              ┌────────────────────────┐  ST14
              │ WB CORRECTION          │
              └───────────┬────────────┘
                          ↓
              ┌────────────────────────┐  ST15
              │ GAMMA CORRECTION       │
              └───────────┬────────────┘
                          ↓
              ┌────────────────────────┐  ST16
              │ CONVERSION OF R, G,    │
              │ B INTO Y, [B-Y], [R-Y] │
              └───────────┬────────────┘
                          ↓
              ┌────────────────────────┐  ST17
              │ CORRECT                │
              │ SPECIFIC COLOR         │
              └───────────┬────────────┘
                          ↓
                    ┌─────────────┐  ST18
                    │   OUTPUT    │
                    └─────────────┘
```

Fig.8

| Gain B | Hue R |
|--------|-------|
| Hue B | Gain R |

Fig.9A

| 1.5 | 0.0 |
|-----|-----|
| −0.5 | 1.0 |

Fig.9B

$$\begin{bmatrix} [B-Y]'' \\ [R-Y]'' \end{bmatrix} = \begin{bmatrix} Gain\,B & Hue\,R \\ Hue\,B & Gain\,R \end{bmatrix} \begin{bmatrix} [B-Y] \\ [R-Y] \end{bmatrix}$$

CORRECTED
COLOR
DIFFERENCE
SIGNALS

COLOR CORRECTION
VALUES
(COLOR CORRECTION
MATRIX)

COLOR
DIFFERENCE
SIGNALS

Fig.9C

Fig.9D

EP 1 617 681 A1

## INTERNATIONAL SEARCH REPORT

| | International application No. |
|---|---|
| | PCT/JP2004/003353 |

**A. CLASSIFICATION OF SUBJECT MATTER**
Int.Cl⁷ H04N9/64

According to International Patent Classification (IPC) or to both national classification and IPC

**B. FIELDS SEARCHED**

Minimum documentation searched (classification system followed by classification symbols)
Int.Cl⁷ H04N1/46, 1/60, 9/64, 9/68, 9/73

Documentation searched other than minimum documentation to the extent that such documents are included in the fields searched

| Jitsuyo Shinan Koho | 1922–1996 | Jitsuyo Shinan Toroku Koho | 1996–2004 |
| Kokai Jitsuyo Shinan Koho | 1971–2004 | Toroku Jitsuyo Shinan Koho | 1994–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2003-46797 A (Seiko Epson Corp.), 14 February, 2003 (14.02.03), Par. Nos. [0045] to [0048], [0065]; Figs. 5, 10 & US 2003/35127 A | 1-10 |
| Y | JP 6-78320 A (Matsushita Electric Industrial Co., Ltd.), 18 March, 1994 (18.03.94), Full text; Fig. 1 & US 5384601 A | 1-10 |
| Y | JP 7-67131 A (Mitsubishi Electric Corp.), 10 March, 1995 (10.03.95), Par. No. [0029]; Fig. 5 (Family: none) | 2,7 |

| ☒ Further documents are listed in the continuation of Box C. | ☐ See patent family annex. |

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16 June, 2004 (16.06.04) | 06 July, 2004 (06.07.04) |

| Name and mailing address of the ISA/ Japanese Patent Office | Authorized officer |
|---|---|
| Facsimile No. | Telephone No. |

Form PCT/ISA/210 (second sheet) (January 2004)

**INTERNATIONAL SEARCH REPORT**

| International application No. |
|---|
| PCT/JP2004/003353 |

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2002-247413 A  (Matsushita Electric Industrial Co., Ltd.), 30 August, 2002 (30.08.02), Par. Nos. [0045] to [0055]; Figs. 1, 3, 7 (Family: none) | 5-9 |

Form PCT/ISA/210 (continuation of second sheet) (January 2004)